# EUROPEAN PATENT APPLICATION

(11) **EP 1 647 854 A1**
(43) Date of publication of application: **19.04.2006**
(21) Application number: 04400067.7
(22) Date of filing: 01.12.2004
(51) Int. Cl.: G02C 11/02, G02C 9/00

(54) **Ornamentation for eyeglasses**

(30) Priority: 14.10.2004 US 963769
(71) Applicant: Sunshine Optical Company Limited, Tsuen Wan, New Territories, Hong Kong (CN)
(72) Inventor: Chow, Yin Man, Nos.11-19 Sha Tsui road Tsuen Wan (HK)
(74) Representative: Fuhlendorf, Jörn

(57) **Abstract**

A detachable ornamental device with magnets for eyeglasses. The ornamental partial frame is designed similar to an eyeglass frame without lenses, and includes simply a rim and two magnets each positioned and embedded in a respective extension at the two ends of the rim of the ornament. The detachable ornamental device is attached in front of the primary eyeglasses. The primary eyeglasses are composed of lenses, in which a magnet is embedded in the studs positioned at the two ends of the connecting portions corresponding to the positions of the magnets of the ornamental partial frame. By way of the magnet attracting force, the ornamental device is attracted and secured by magnets to the eyeglasses for either clipping-on or clipping-off the studs.

## Description

### Field of the Invention

This invention relates to a detachable ornamental device with magnets, and more particularly, a pair of eyeglasses having an ornamental partial frame mounted thereon. The partial frame does not have lenses. The partial frame can be easily attached to and detached from an eyeglasses frame.

### Background of the invention

Nowadays eyeglasses, no matter which frames are made of metal or plastic, sometimes using magnets to attach a pair of auxiliary sunglasses to a pair of primary eyeglasses. This is a very popular and common method for connecting two sets of eyeglasses. These magnetic clip-on or hook-on methods of connection have long been used to transform primary eyeglasses into sunglasses without changing the primary optical eyeglasses. One can simply dispose a pair of clip-on or hook-up auxiliary sunglasses in front of the primary optical eyeglasses. Very often, the attachment is merely a pair of sunglasses and is limited to certain prescriptions of eyeglass frames in order to match with the primary eyeglasses.

The present invention arises to provide a new and novel configuration to ordinary eyeglasses so as to match with one's taste and sense of fashion.

### Summary of the Invention

In a first aspect of the present invention, a detachable ornamental device with magnets is provided, which comprises an ornamental, partial frame the appearance of which is similar to an eyeglass frame but with no lenses mounted thereon. A magnet is located at both ends of said ornamental partial frame. Eyeglasses composed of lenses and a frame having a magnet at both ends are used with the ornamental partial frame having no temple and lenses attachable to said eyeglasses.

A second aspect of the present invention is to provide a trendy fashion to eyeglasses in which one may change the pattern of one's primary optical eyeglasses by disposing said ornamental frame in front of the primary frame, whilst said ornamental frame can be made in whatever prescription or color in order to match with one's daily style of fashion. This inventive ornamental frame is different from that of ordinary auxiliary eyeglasses or sunglasses because it is basically an ornament and said ornament cannot be worn by itself in the absence of said ordinary eyeglasses.
This invention includes the following:
Firstly, a pair of primary eyeglasses, either made of metal or plastic materials, including two sides each having a stud on the connecting portion, in which a magnet is embedded, and said ornament for disposing in front of ordinary eyeglasses, wherein said ornament comprises two sides each having an extension extending backward, in which a magnet is embedded and for engaging with the studs of said primary eyeglasses for securing said ornament.
Secondly, this invention is to provide an ornament adapted to be attached to primary eyeglasses in a specific prescription.

### Brief description of the drawings

FIG. 1A is a plan view of an ornamental device designed similar to an eyeglass frame with a magnet embedded at the two ends of an ornamental partial frame showing one embodiment of the present invention.
FIG. 1B is a front view of FIG. 1A showing the extensions on both ends of the present invention.
FIG. 2A is a plan view of a pair of primary eyeglasses in which a magnet is embedded in the stud positioned at the connecting portion of said primary eyeglasses.
FIG. 2B is a front view of FIG. 2A.
FIG. 3A is a front view showing how said ornamental partial frame is secured to said primary eyeglasses by the magnets according to the present invention.
FIG. 3B is a side view of FIG. 3A.
FIG. 4 is a plan view of another embodiment of said ornament attached to said primary eyeglasses.
FIG. 5A is a front view of an ornamental device attached on a primary frame according to a second preferred embodiment of the present invention.
FIG. 5B is a side view of FIG. 5A.
FIG. 6 is a plan view of an ornamental device and eyeglasses attached together according to the above second embodiment of the present invention.
FIG. 7A is a front view illustrating an ornamental device mounted on the eyeglasses according to a third preferred embodiment of the present invention.
FIG. 7B is a front view of a plastic eyeglass ornament.
FIG. 8A is a front view of an ornamental device mounted on eyeglasses according to a fourth preferred embodiment of the present invention.
FIG. 8B is a front view of a plastic eyeglass ornamental partial frame showing the extension on both ends of the ornamental partial frame according to the above fourth preferred embodiment of the present invention.
FIG. 8C is an exploded view of the right extension of the ornamental partial frame and the right connecting portion of the eyeglasses, illustrating the positioning of the magnets according to the above fourth preferred embodiment of the present invention.
FIG. 9A is a front view of another plastic eyeglass ornamental partial frame.
FIG. 9B is a front view of a plastic eyeglass ornamental partial frame mounted on primary eyeglasses according to a fifth preferred embodiment of the present invention.
FIG. 9C is a plan view showing how said ornamental partial frame is secured to primary eyeglasses according to the above fifth embodiment of the present invention.
FIG. 9D is a sectional view taken along line 9D-9D in Figure 9B.
FIG. 10A is a front view of a plastic eyeglass ornamental partial frame mounted on primary eyeglasses according to a sixth preferred embodiment of the present invention.
FIG. 10B is a front view of the plastic ornamental plastic frame according to the above sixth preferred embodiment of the present invention.
FIG. 10C is a perspective view of the extension of the ornamental partial frame illustrating the positioning of the magnet according to the above sixth preferred embodiment of the present invention.
FIG. 11A is a front view of a plastic eyeglass ornamental partial frame having two projecting bend tabs with a magnet located at a terminal end of each bend tab.
FIG. 11B is a front view of the plastic eyeglass ornamental partial frame of FIG. 11A mounted on a pair of primary eyeglasses.
FIG. 11C is a plan view showing how the ornamental partial frame of FIG. 11A is secured to a pair of primary eyeglasses.
FIG. 11D is a perspective view illustrating the bending of the bend tab or projections of the ornamental partial frame of FIG. 11A.
FIG. 12A is a front view of a plastic eyeglass ornamental partial frame mounted on a pair of primary eyeglasses.
FIG. 12B is a front view of the ornamental partial frame shown in FIG. 12A.
FIG. 12C is a partial sectional plan view of the ornamental partial frame of FIG. 12B secured to a pair of primary eyeglasses as shown in FIG. 12A.
FIG. 12D is a sectional view of only the ornamental partial frame of FIG. 12B taken along line 12D-12D as shown in FIG. 12A.

### Detailed description of the preferred embodiments

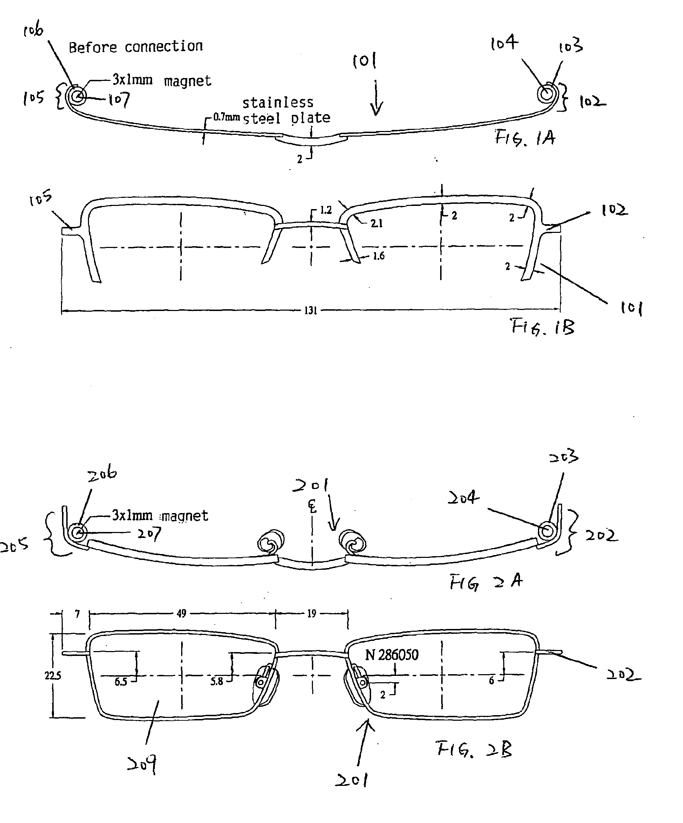

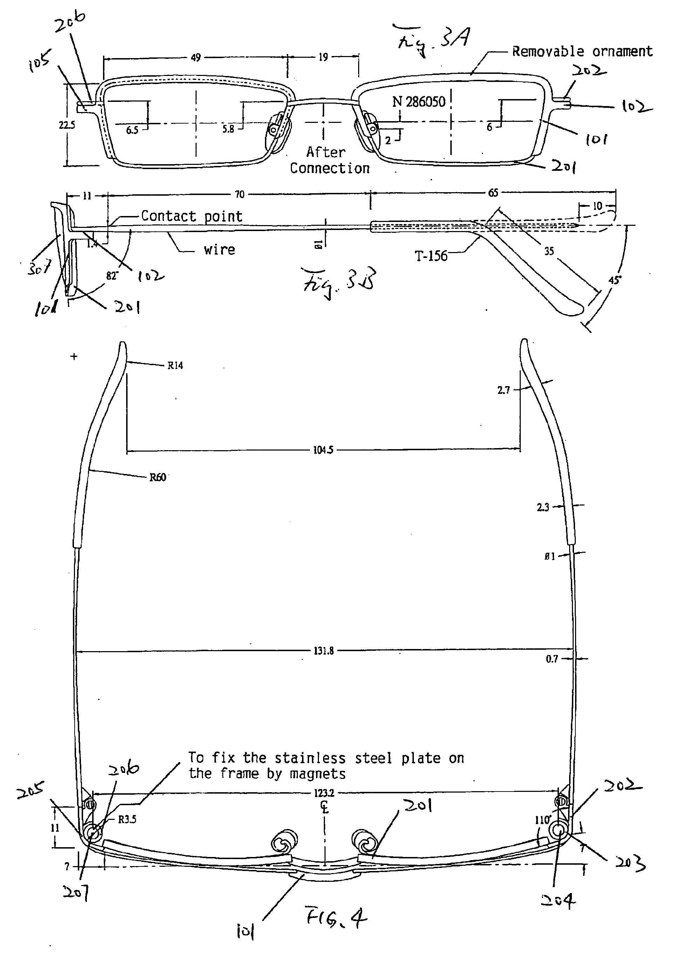

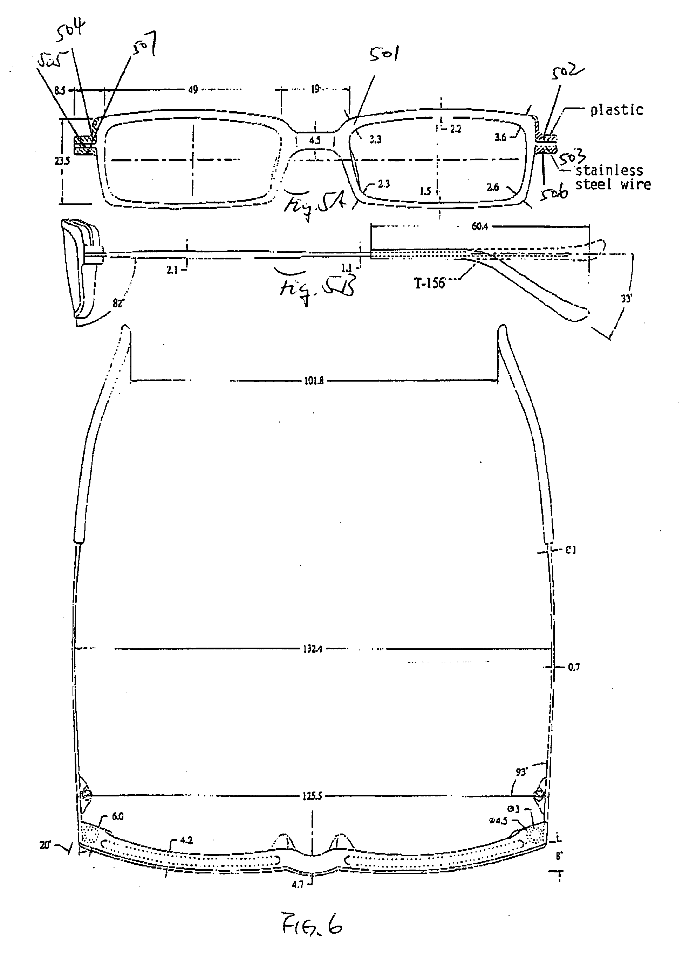

An eyeglass ornament with magnets of the present invention, referring to FIG. 1A and 1B, includes a device similar to an eyeglass frame 101, connecting portion 101, 105 at two end portion of the device 101 extending rearwardly, each having a stud 103, 106 fixed at the inner side of said connection portions 102, 105. A magnet 104, 107 is embedded in the respective stud 103, 106.

A pair of eyeglasses, in accordance with the present invention, comprises a primary frame 201, lenses 207, mounted within.the frame, connecting portions 202, 205 at two end portions of the frame 201 extending rearwardly, each having a stud 203, 206 fixed at the inner side of said connection portions 202, 205. A magnet 204, 207 is embedded in the respective studs 203, 206 for supporting the eyeglass ornament 101. The magnets 204, 207 are preferably in a round shape and both sides, upward and downward, may attract another magnet.

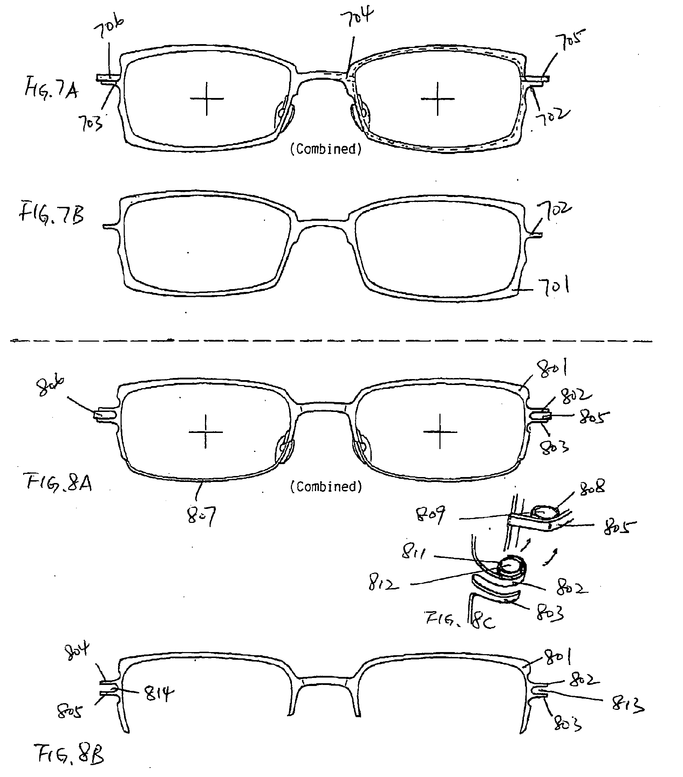

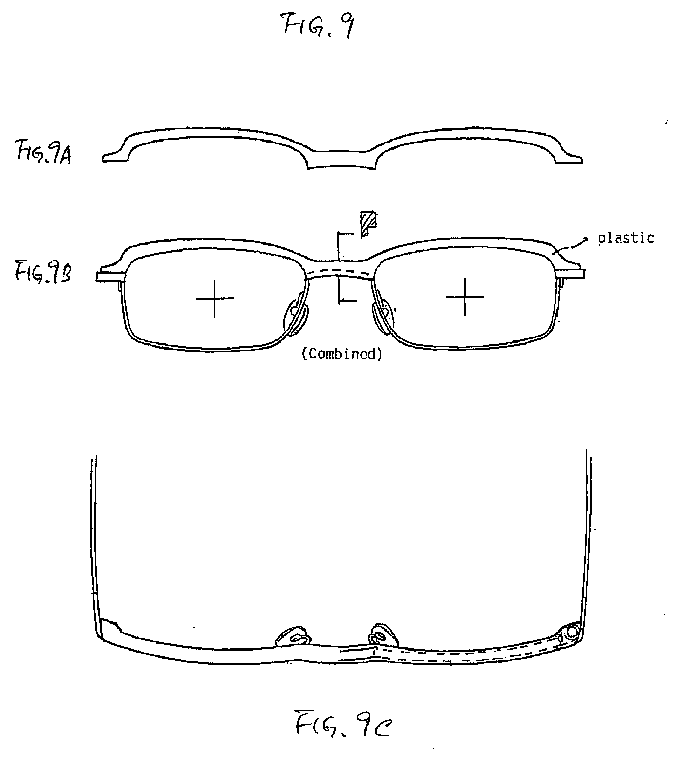

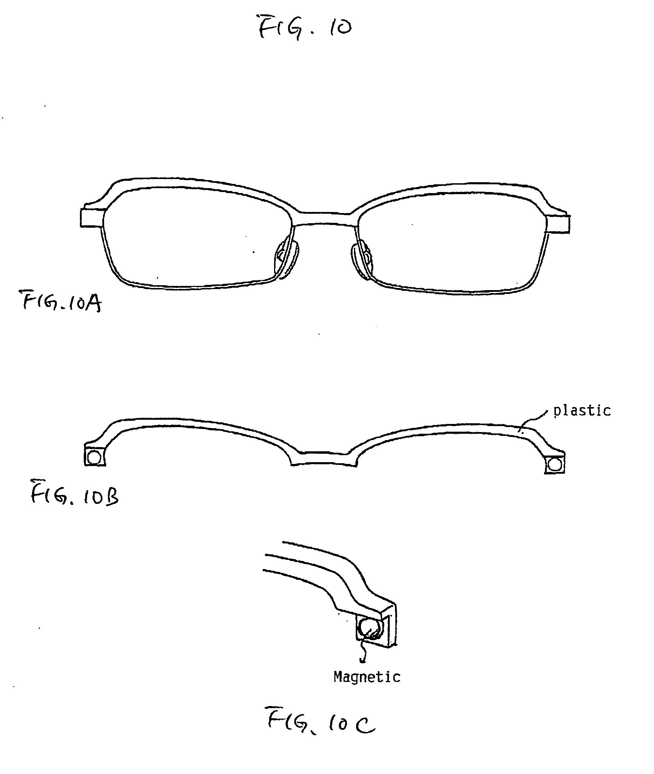

The eyeglass ornament 101, according to the present invention, can be made in any color, and the material employable is not specially limited. An eyeglass ornament 101 is attached to the front of said primary frame 201, namely, as shown in FIGS. 3 and 4, when said eyeglass ornament 101 is disposed in front of said primary frame 201, the magnets 104, 107 of said eyeglass ornament 101 are magnetically connected to the magnets 204, 207 of said primary frame 201. Thus, the appearance of said primary frame 201 can be changed when said eyeglass ornament 101 is put onto said primary frame 201.

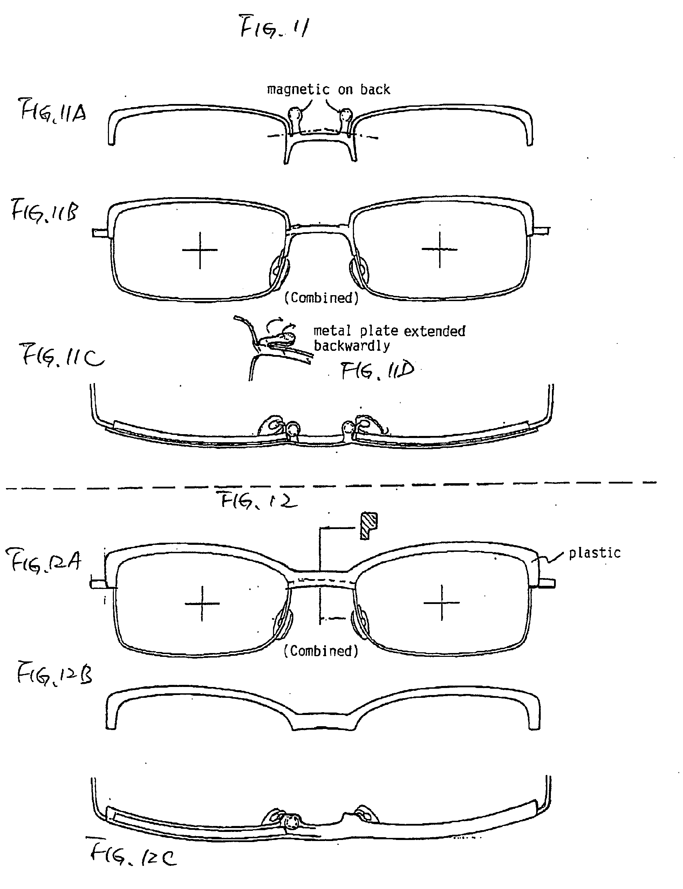

From the above description, it can be understood that the application of the present invention is not limited to eyeglass frames made of metal but is also applicable to plastic eyeglass frames as shown in FIGS. 5 and 6. Referring to FIGS. 8A, 8B and 8C, another preferred embodiment of the present invention is illustrated, wherein a plastic ornamental frame 801 having two extensions 802, 803, 804, 805 at the two ends of said ornamental frame 801 extend backwardly and the two pairs of extensions 802/803, 804/805 parallel to each other form a gap 813, 814 between each other. As shown in FIG. 8C, more particularly, at the upper extension 802, 804 of said ornamental frame, a stud 811 is fixed to the inner side of the extension 802 with a magnet 812 embedded therein. The primary frame 807, having connection portions 805, 806 on both ends of the frame and another stud 808 is fixed to the inner side of the connecting portions 805, 806 with a magnet 812 embedded therein, supports the ornamental frame 801 by means of the magnet force of the interlocking system.

Referring to FIG. 7A and 7B, there is shown another arrangement that is similar to that of FIG. 8, with the exception that the ornamental frame 701 has one extension 702, 703 on each side and said ornamental frame 701 is mounted on primary frame 704 by attaching the extensions 702, 703 beneath the connecting portions 705, 706 of said primary frame 704.

Referring to Figures 9A, 9B and 9C, a plastic ornamental partial frame 300 is shown. The two ends 302, 304 of the frame include magnets embedded in the ends in an arrangement similar to that shown in Figures 1A and 1B such that the magnets 306, 308 projecting from a bottom surface of the ends 302, 304 interengage with an upper surface of magnets 310, 312 of a primary pair of eyeglasses 314.

This is best shown in partial sectional view 9C where the magnet 308 is seen sitting on top of magnet 312 at end 304 of the frame 300. Alternatively, in Figure 9C, the tabs 310, 312 can be made of metal to secure the magnets 306, 308 to the tabs 310, 312 so as to secure the partial frame 300 to the eyeglasses 314 without the need for magnets in the tabs 310, 312 of the eyeglasses 314.

In addition, a step-like cut out portion 316 of bridge portion 318 is configured to rest on top of a bridge 320 of the eyeglasses 314. This provides additional support stability to the partial frame 300 mounted on the eyeglasses 314.

Referring to Figures 10A, 10B and 10C, a plastic ornamental partial frame 350 includes two ends 352, 354. Each of the ends includes a forwardly exposed magnet 356, 358 as shown in greater detail in Figure 10C. The partial frame 350 is positioned on top of a pair of eyeglasses 360 by positioning the portions of the frame including the magnets 356, 358 behind metal tabs 362, 364 so as to secure the magnets 356, 358 to the primary eyeglasses 360.

Referring to Figures 11A through 11D, a plastic ornamental partial frame 370 is shown having bridge portion 372. Extending from the bridge portion 372 are projecting tabs or projections 374, 376. Each of the tabs 374, 376 terminates in a magnet 378, 380, respectively.

To mount the partial frame 370 on a pair of primary eyeglasses 382, the tabs or projections 374, 376 are bent as best shown in Figure 11D in the direction of arrows 384 around the bridge portion 386 of the primary eyeglasses 382. The metal bridge portion 386 provides an anchoring of the partial frame 370 due to the attraction of the magnets 378, 380 to the bridge portion 386 of the eyeglasses 382.

Referring to Figures 12A through 12D, a plastic ornamental partial frame 400 includes a central bridge portion 402. Projecting rearwardly from the bridge portion 402 as shown in Figure 12C are two tabs 404, 406 each including an exposed downwardly surface of a magnet 408, 410, respectively. To mount the partial frame 400 onto a pair of primary eyeglasses 412, the magnets 408, 410 are attracted to a metal bridge portion 414 of the pair of eyeglasses 412. In addition, as was explained with reference to the embodiment of Figures 9A through 9D, the partial frame 400 include a stepped portion 416 which helps interengage the bridge portion 402 of the partial frame 400 with the bridge portion 414 of the pair of primary eyeglasses 412.

The foregoing description should be considered as illustrative only of the principles of the invention. Since numerous modifications and changes will readily occur to those skilled in the art, it is not desired to limit the invention to the exact construction and operation shown and described, and, accordingly, all suitable modifications and equivalents may be resorted to, falling within the scope of the invention.

## Claims

1. A pair of eyeglasses comprising
a frame having two opposite ends,
a pair of lenses installed within and supported by said frame,
a pair of connecting portions at each opposite end of said frame,
a pair of studs fixed at an inner side of each of said connecting portions, and
a pair of magnets, each being embedded within a respective one of said studs of said connecting portions.

2. The eyeglasses as recited in claim 1, wherein said connecting portions and said studs are made of metal.

3. An ornamental frame removably attachable to a pair of eyeglasses, said ornamental frame comprising:
an at least partial eyeglass frame being made of one of metal and plastic material and being devoid of lenses,
at least one pair of extensions at each end of said at least partial eyeglass frame,
a pair of studs fixed at an inner side of each of said extensions, and
a pair of magnets, each magnet being embedded within a respective one of said studs of said extensions for interengaging with metal portions of a pair of primary eyeglasses so as to aesthetically enhance an appearance of the pair of primary eyeglasses without affecting vision through lenses of the primary eyeglasses.

4. An ornamental frame removably attachable to a pair of eyeglasses, said ornamental frame comprising:
an at least partial eyeglass frame devoid of lenses,
two projections extending from the frame, and
a magnet located in each of said two projections for releasably attaching the frame to a pair of eyeglasses so as to aesthetically enhance an appearance of the pair of eyeglasses without affecting vision through lenses of the pair of eyeglasses.

5. The ornamental frame as claimed in claim 4, wherein said two projections extend from opposite ends of said frame.

6. The ornamental frame as claimed in claim 4, wherein said two projections extend from a bridge portion of said frame.

7. The ornamental frame as claimed in claim 6, wherein said two projections are bendable around a bridge portion of the pair of eyeglasses.

8. The ornamental frame as claimed in claim 7, wherein said magnet is located in a terminal portion of each of said two projections of said frame.

9. The ornamental frame as claimed in claim 5, wherein said two projections are each bifurcated for receipt of a portion of the pair of eyeglasses therebetween.

10. The ornamental frame as claimed in claim 5, wherein said two projections extend under corresponding projections of the pair of eyeglasses.

11. The ornamental frame as claimed in claim 5, wherein said two projections extend behind corresponding projections of the pair of eyeglasses.

12. The ornamental frame as claimed in claim 5, wherein said two projections extend over corresponding projections of the pair of eyeglasses.
